# EUROPÄISCHE PATENTSCHRIFT

(11) **EP 4 430 143 B1**
(45) Veröffentlichungstag und Bekanntmachung des Hinweises auf die Patenterteilung: **31.12.2025**
(21) Anmeldenummer: 22813481.3
(22) Anmeldetag: 02.11.2022
(51) Int. Cl.: C10G 21/28

(54) **VERFAHREN UND VORRICHTUNG ZUR TRENNUNG EINES KOHLENWASSERSTOFFHALTIGEN EINSATZSTOFFSTROMS DURCH EXTRAKTIVDESTILLATION**
METHOD AND APPARATUS FOR SEPARATING A HYDROCARBON FEEDSTOCK BY EXTRACTIVE DISTILLATION
PROCÉDE ET APPAREIL DE SÉPARATION D'UNE CHARGE D'HYDROCARBURES PAR DISTILLATION EXTRACTIVE

(30) Priorität: 12.11.2021 DE 102021212775; 12.11.2021 BE 202105880
(43) Veröffentlichungstag der Anmeldung: 18.09.2024
(73) Patentinhaber: thyssenkrupp Uhde GmbH, 44141 Dortmund (DE); thyssenkrupp Uhde Engineering Services GmbH, 65812 Bad Soden am Taunus (DE); thyssenkrupp AG, 45143 Essen (DE)
(72) Erfinder: KLEIBER, Michael, 65795 Hattersheim (DE); BETTINGER, Simone, 65812 Bad Soden/Taunus (DE); SCHUCH, Frank, 44229 Dortmund (DE); GRATOWSKI, Martin, 60386 Frankfurt (DE); GEHRKE, Helmut, 59192 Bergkamen (DE)
(74) Vertreter: thyssenkrupp Intellectual Property GmbH
(86) Internationale Anmeldenummer: PCT/EP2022/080503
(87) Internationale Veröffentlichungsnummer: WO 2023/083655

(56) Entgegenhaltungen:
- WO-A1-99/11740
- CA-A- 610 414
- DE-A1- 102012 111 292
- FR-A1- 2 259 891
- US-A- 3 451 925
- US-A- 3 476 680

## Beschreibung

### Stand der Technik

Die Erfindung betrifft ein Verfahren zur Trennung eines kohlenwasserstoffhaltigen Einsatzstoffstroms durch Extraktivdestillation nach dem Oberbegriff des Anspruchs 1 und eine Vorrichtung nach dem Oberbegriff des Anspruchs 8.

Aromaten, insbesondere die einfachsten aromatischen Verbindungen Benzol, Toluol und Xylol, sind von großtechnischer Bedeutung als Zwischenprodukte für die chemische Industrie. Für die Gewinnung von Aromaten sind verschiedene technische Verfahren bekannt. Eine Verfahrensart, welche bei vergleichsweise geringen Kosten eine besonders hohe Reinheit des Aromaten-Produktstroms erreicht, ist die Gewinnung durch Extraktivdestillation aus einem kohlenwasserstoffhaltigen Einsatzstoffstrom. Als Einsatzstoffstrom kommen beispielsweise Rohbenzin, Pyrolysebenzin, Reformatbenzin oder auch Kokerei-Leichtöl in Betracht. Schwere Komponenten werden bevorzugt vor der Aromatengewinnung, beispielsweise durch Abtrennung der C₈₊-Fraktion, aus dem Einsatzstoffstrom entfernt.

Bei der Gewinnung von Aromaten durch Extraktivdestillation wird der Einsatzstoffstrom mit einem selektiven Lösungsmittel für Aromaten im Gegenstrom in Kontakt gebracht. Das Lösungsmittel beeinflusst die Flüchtigkeit der unterschiedlichen Bestandteile des Einsatzstoffstroms unterschiedlich stark. Die Flüchtigkeit der aromatischen Bestandteile wird durch die Verdünnung herabgesetzt, während die der aliphatischen Bestandteile deutlich erhöht wird. Auf diese Weise wird eine destillative Auftrennung in Aromaten und Nichtaromaten/Aliphaten ermöglicht. In einem ersten Schritt werden die im Lösungsmittel gelösten Aromaten dann gemäß eines thermischen Trennschnitts mittels extraktiver Destillation von den aliphatischen Bestandteilen der Einsatzmischung getrennt, welche als Kopfprodukt der Destillation abgeführt werden. In einem zweiten Schritt werden die Aromaten durch Strippung als Kopfprodukt aus dem Lösungsmittel getrieben. Anschließend kann der Aromaten-Produktstrom in einzelne Aromatenfraktionen weiter aufgetrennt werden. Das an Aromaten abgereicherte Lösungsmittel wird in die extraktive Destillation zurückgeführt und wiederverwendet. Auf diese Weise lassen sich in einem kontinuierlichen Prozess einzelne Aromaten in Reinform gewinnen.

Als Lösungsmittel für die Extraktivdestillation sind unter anderem Sulfolan, Methylsulfolane, N-Methylpyrrolidon, N-Formylmorpholin, Ethylenglykol und deren Mischungen, sowie Mischungen aus den genannten Lösungsmitteln mit Wasser bekannt. Die verwendeten Lösungsmittel bzw. Lösungsmittelmischungen sind wasserlöslich.

Aufgrund der dauerhaften Wiederverwendung desselben Lösungsmittels in einem Lösungsmittelkreislauf sammeln sich Verunreinigungen, welche den Prozess weder als Kopfprodukt der destillativen Abtrennung der Aliphaten noch als Kopfprodukt bei der Strippung der Aromaten verlassen, im Lösungsmittel an. Durch das Bestreben der Betreiber, die Energieeffizienz der Anlagen zu optimieren und Betriebsmittel einzusparen, treten solche Verunreinigungen zunehmend auch im Einsatzstoffstrom von Anlagen auf, die allein der Gewinnung von Benzol und Toluol dienen. Insbesondere in Anlagen, welche nicht nur der Gewinnung von Benzol und Toluol, sondern zugleich auch der Gewinnung von Xylol dienen, ist eine Anreicherung solcher Verunreinigungen langfristig kaum zu vermeiden, da der Einsatzstoffstrom in diesem Fall einen größeren Anteil an höher siedenden Komponenten enthalten muss. Weiterhin können sich durch der Extraktivdestillation vorgeschaltete Prozesse, wie beispielsweise Clay-Treatment, schwere Komponenten eingebracht werden, die sich im Lösemittel anreichern. Aber auch aufgrund von Fehlbedienung oder Fehlfunktionen von der Extraktivdestillation vorgeschalteten Anlagenteilen, die beispielsweise der Entfernung höher siedender Anteile dienen, kann es zu einer erhöhten Kontamination des in der extraktiven Destillation umlaufenden Lösemittels mit schwersiedenden Verunreinigungen kommen.

Die Verunreinigungen führen im Laufe der Zeit dazu, dass das Lösungsmittel seine Extraktionskraft verliert und ausgetauscht werden muss. Um die mit dem Austausch des Lösungsmittels verbundenen Kosten zu reduzieren, ist die Möglichkeit einer Aufreinigung des Lösungsmittels im Lösungsmittelkreislauf wünschenswert, durch die die Verunreinigungen entfernt werden. Auf diese Weise kann die Zyklusdauer bis zum Austausch des Lösungsmittels erheblich verlängert werden.

Zur Aufreinigung des Lösungsmittels ist es beispielsweise aus US 2010/0228072 A1 bekannt, einen Teilstrom des Lösungsmittelkreislaufes einer Destillation zu unterziehen, wobei das aufgereinigte Lösungsmittel die Destillation als Kopfprodukt verlässt und als Destillationsrückstand zurückbleibende Verunreinigungen aus der Anlage entfernt werden. Nachteilig ist, dass mit dieser Art der Aufreinigung nur im Vergleich zu dem Lösungsmittel schwerer siedende Verunreinigungen aus dem Lösungsmittelkreislauf entfernt werden können. Verunreinigungen, die leichter als das Lösungsmittel sieden oder Mitsieder (engl. *co-boiler*) zu dem Lösungsmittel sind, d.h. einen eng benachbarten Siedepunkt aufweisen, verbleiben im Lösungsmittel.

Aus DE 10 2012 111 292 A1 ist es daher bekannt, einen Teilstrom des aus dem Sumpf der Stripper-Kolonne abgezogenen Extraktionsmittels mit Wasser zu versetzen und einer Destillationskolonne zuzuführen. In der Destillationskolonne erfolgt eine Trennung des Extraktionsmittels von dem zugesetzten Wasser und von in dem Extraktionsmittel gelösten Kohlenwasserstoffen. Wasser und Kohlenwasserstoffe werden über Kopf der Destillationskolonne abgeführt. Diese Art der Aufreinigung beruht darauf, dass sich das Extraktionsmittel im Wasser löst und die wasserunlöslichen Kohlenwasserstoffe so aus der Lösung im Extraktionsmittel verdrängt werden und eine leichter flüchtige Phase bilden, die sich destillativ mit dem Wasser abtrennen lässt. Nachteilig ist allerdings, dass eine große Menge Wasser eingesetzt werden muss, um das gesamte Extraktionsmittel zu behandeln. Anschließend muss das gesamte eingesetzte Wasser, zumindest im Falle einer Extraktivdestillation mit weitgehend wasserfreiem Lösungsmittel, wieder abdestilliert werden. Das bekannte Verfahren zur Aufreinigung des Lösungsmittels ist daher mit einem hohen Energie- und Kostenaufwand verbunden.

FR 2 259 891 A1 beschreibt ein Verfahren zur Abtrennung aromatischer Kohlenwasserstoffe. Das Verfahren setzt neben einem Lösungsmittel sowohl in dem Extraktor, als auch in dem Stripper Wasser zu. Damit liegt bereits ein großer Wasseranteil in dem Lösungsmittelkreislauf vor. Die Aufreinigung des Lösungsmittels erfolgt gemäß FR 2 259 891 A durch einen Lösungsmittelregenerator. Dem aufzureinigenden Lösungsmittel wird zunächst zusätzliches Wasser zugeführt. Die Mischung wird anschließend durch Wasserdampfdestillation unter Vakuum von niedrig- und hochsiedenden Verunreinigungen abgetrennt. Das Lösungsmittel wird zurückgewonnen und zum Extraktor zurückgeführt. Das Wasser und die Verunreinigungen werden verworfen.

US 3 476 680 A zeigt einen rein extraktiven Abtrennprozess für aromatische Kohlenwasserstoffe durch eine Flüssig/Flüssig-Extraktion in einem Extraktor mit einem Lösungsmittel. Anschließend wird in einer Wasserwäsche das Lösungsmittel durch den Zusatz von Wasser extrahiert und die verbleibenden Aromaten werden abgeführt. Zur Rückgewinnung des Lösungsmittels wird eine Destillation des Wasser-Lösungsmittelgemisches ausgeführt.

US 3 451 925 A und CA 610 414 A beschreiben zu US 3 476 680 A ähnliche Verfahren, die auf einer doppelten Flüssig-/Flüssig-Extraktion mit Lösungsmittel und Wasser beruhen und bei denen anschließend das Wasser in einer Destillation vom Lösungsmittel wieder abgetrennt werden muss. WO 99/11740 A1 zeigt eine Parallelschaltung von einem Extraktionsverfahren mit einer Exktraktivdestillation, bei dem Wasserdampf zum Strippen der Aromaten von dem Lösungsmittel eingesetzt wird.

### Offenbarung der Erfindung

Aufgabe der Erfindung ist es daher, ein Verfahren und eine Vorrichtung zur Trennung eines kohlenwasserstoffhaltigen Einsatzstoffstroms durch Extraktivdestillation anzugeben, in denen die Selektivität und Kapazität des verwendeten Lösungsmittels über einen langen Zeitraum durch einen ressourcenschonenden Prozess sichergestellt wird.

Diese Aufgabe wird gelöst durch ein Verfahren zur Trennung eines kohlenwasserstoffhaltigen Einsatzstoffstroms durch Extraktivdestillation mit den Merkmalen des Anspruchs 1 und eine Vorrichtung mit den Merkmalen des Anspruchs 8.

Hierdurch wird ein Verfahren zur Trennung eines kohlenwasserstoffhaltigen Einsatzstoffstroms durch Extraktivdestillation in mindestens einen Aliphaten-Produktstrom und einen Aromaten-Produktstrom geschaffen, welches die folgenden Schritte umfasst:
- Inkontaktbringen des Einsatzstoffstroms mit einem wasserlöslichen Lösungsmittel für Aromaten im Gegenstrom,
- Destillatives Abtrennen einer Aliphatenfraktion aus dem erhaltenen Gemisch unter Verbleib des mit Aromaten angereicherten Lösungsmittels und Abführen der Aliphatenfraktion in dem Aliphaten-Produktstrom,
- Strippen der Aromaten aus dem mit Aromaten angereicherten Lösungsmittel und Abführen der Aromaten in dem Aromaten-Produktstrom
- Rückführen des an Aromaten abgereicherten Lösungsmittels in einem Lösungsmittelkreislauf zur Extraktion weiterer Aromaten aus dem Einsatzstoffstrom, wobei sich als Verunreinigungen Verbindungen mit einem im Vergleich zu dem Lösungsmittel geringeren Siedepunkt in dem Lösungsmittelkreislauf ansammeln, und
- Aufreinigen zumindest eines Teilstroms des an Aromaten abgereicherten Lösungsmittels zur Entfernung der Verunreinigungen.

Erfindungsgemäß ist vorgesehen, dass der Teilstrom zum Aufreinigen einem thermischen Trennverfahren unterzogen wird, bei dem die Verunreinigungen zumindest teilweise in einem Kopfprodukt abgeführt und das verbleibende aufgereinigte Lösungsmittel in den Lösungsmittelkreislauf zurückgeführt wird.

Der Teilstrom im Sinne der Erfindung kann einen beliebigen Anteil des gesamten Lösungsmittelkreislaufs umfassen. Insbesondere kann der Teilstrom auch der gesamte Lösungsmittelstrom im Lösungsmittelkreislauf sein. Bevorzugt ist ein Teilstrom in der Aufreinigung, der einem Anteil von 1 Massen-% bis 20 Massen-% am gesamten Lösungsmittelstrom im Lösungsmittelkreislauf entspricht.

Durch das thermische Trennverfahren werden die im Vergleich zu dem Lösungsmittel leichter flüchtigen Verunreinigungen aus dem Lösungsmittel abgetrennt und als gesondertes Kopfprodukt abgeführt.

Der Trennschnitt des thermischen Trennverfahrens wird bevorzugt so gewählt, dass das als Sumpfprodukt anfallende aufgereinigte Lösungsmittel nicht mehr als 5 Massen-%, besonders bevorzugt nicht mehr als 1 Massen-% an leichtsiedenden Verunreinigungen enthält. Um eine in diesem Sinne ausreichende Reinheit des aufgereinigten Lösungsmittels zu erreichen, werden in dem thermischen Trennverfahren bevorzugt auch Mitsieder zu dem Lösungsmittel und ein Teil des Lösungsmittels selbst in dem Kopfprodukt abgeführt.

Im Sinne dieser Offenbarung ist eine Komponente gegenüber dem Lösungsmittel als leichtsiedend anzusehen, wenn ihr Siedepunkt (bei dem Betriebsdruck des thermischen Trennverfahrens) mindestens 10 K niedriger liegt als der Siedepunkt des Lösungsmittels, oder wenn die Komponente mit dem Lösungsmittel ein in diesem Sinne leichtsiedendes Azeotrop bildet. Komponenten oder Azeotrope, deren Siedepunkt im Bereich +/-10 K um den Siedepunkt des Lösungsmittels liegt, gelten als Mitsieder zum Lösungsmittel. Im Sinne dieser Offenbarung ist unter dem Siedepunkt einer Substanz ohne weitere Angaben zu den Umgebungsbedingungen der Normalsiedepunkt der Substanz zu verstehen. Wird ein Gemisch aus mehreren Komponenten als Lösungsmittel verwendet, bezieht sich der Begriff "Siedepunkt des Lösungsmittels" im Sinne dieser Offenbarung auf den Siedepunkt der leichtsiedendsten Komponente des Lösungsmittelgemisches.

Die Anwendung eines thermischen Trennverfahrens auf den Teilstrom des Lösungsmittelkreislaufs hat den Vorteil, dass es ohne den Zusatz eines zusätzlichen Extraktionsmittels - wie beispielsweise Wasser oder ein Extraktionsmittel für Aliphaten - zu dem Teilstrom auskommt, welches im Anschluss wiederum von dem Lösungsmittel abzutrennen wäre. Erfindungsgemäß müssen somit für die eigentliche Aufreinigung des Lösungsmittels keine Zusatzstoffe in den Lösungsmittelkreislauf eingebracht werden. Dies ist insbesondere bei Verfahren zur direkten, wasserfreien Darstellung der Aromaten von Vorteil, bei denen der Wassergehalt im Lösungsmittelkreislauf hinreichend gering gehalten werden muss. Durch den Verzicht auf ein zusätzliches Extraktionsmittel lässt sich das erfindungsgemäße Verfahren auch besonders einfach als Nachrüstlösung in bestehende Anlagen zur Extraktivdestillation von Aromaten integrieren.

Erfindungsgemäß wird zusätzlich zur Aufreinigung des Lösungsmittels eine Rückgewinnung von Lösungsmittel aus dem Kopfprodukt durchgeführt. Hierfür werden die folgenden weiteren Schritte vorgesehen:
- Versetzen des Kopfproduktes mit Wasser unter Ausbildung einer wässrigen, lösungsmittelhaltigen Phase und einer hydrophoben Phase,
- Abscheiden der wässrigen Phase von der hydrophoben Phase und
- Destillation der wässrigen Phase zur Abdestillation des Wassers, wobei das Sumpfprodukt der Destillation in den Lösungsmittelkreislauf zurückgeführt wird.

Die Rückgewinnung des Lösungsmittels aus dem Kopfprodukt führt zu einem geringeren Lösungsmittelverbrauch und erleichtert die Weiterverarbeitung bzw. Entsorgung des Kopfprodukts. Die Rückgewinnung des Lösungsmittels aus dem Kopfprodukt stellt somit eine besonders kosten- und umweltschonenden Aspekt des erfindungsgemäßen Verfahrens dar.

Wenn zur Rückgewinnung des Lösungsmittels nur das Kopfprodukt des thermischen Trennverfahrens und nicht der gesamte aufzureinigende Teilstrom des Lösungsmittelkreislaufs mit Wasser versetzt wird, ist die einzusetzende Wassermenge deutlich reduziert, da das Kopfprodukt einen um Größenordnungen geringeren Lösungsmittelanteil aufweist. Der für die Destillation der wässrigen Phase benötigte Energiebedarf ist somit gegenüber den bekannten, allein auf einer Wasserwäsche basierenden Verfahren zur Lösungsmittelreinigung wesentlich reduziert. Bevorzugt wird zum Kopfprodukt Wasser in einem Massenverhältnis im Bereich von 10:1 bis 1:1 hinzugefügt.

Vorzugsweise wird das abdestillierte Wasser in einem Wasserkreislauf zurückgeführt und erneut dem Extrakt der Flüssig-Flüssig-Extraktion zugesetzt. Die Wiederverwendung des Wassers in einem Wasserkreislauf reduziert die anfallende Menge an behandlungspflichtigen Abwässern und stellt einen ressourcenschonen Betrieb sicher.

Ferner ist bevorzugt, dass der Teilstrom vor Durchführung des thermischen Trennverfahrens in einem Wärmetauscher abgekühlt wird und die Destillation unter Einsatz der im Wärmetauscher anfallenden Wärmeenergie durchgeführt wird. Für die Durchführung des thermischen Trennverfahrens ist eine Temperatur des Teilstroms im Bereich von 140°C bis 200°C vorteilhaft. Die thermische Trennung bei im Vergleich zur Temperatur der Strippung (ca. 160°C-240°C) niedrigerer Temperatur reduziert den thermischen Stress auf das Lösungsmittel und ermöglicht zugleich die Nutzung der Wärmeenergie bei der Lösungsmittelrückgewinnung. Die bei der Abkühlung des Teilstroms im Wärmetauscher anfallende Energiemenge ist in der Regel mehr als ausreichend für die Durchführung der Destillation. Alternativ oder zusätzlich kann Wärmeenergie aus dem Hauptstrom des Lösungsmittelkreislaufs zum Betrieb der Destillationskolonne entnommen werden.

Vorzugsweise wird die Destillation mit einem Kopfdruck von kleiner 1 bar (a), insbesondere bevorzugt kleiner 500 mbar (a) und besonders bevorzugt kleiner 200 mbar (a) durchgeführt. Bei Durchführung der Destillation in einem Vakuum wird der Siedepunkt des Wassers gesenkt und so die Temperatur im Destillationssumpf reduziert. Dadurch kann die für die Destillation erforderliche Energiemenge reduziert werden und es werden unerwünschte Nebenreaktionen im Destillationssumpf vermieden. Bevorzugt wird das Vakuum so eingestellt, dass die Sumpftemperatur in einem Bereich bis höchstens 230°C, besonders bevorzugt zwischen 150°C und 200°C liegt.

Nachdem das Kopfprodukt mit Wasser versetzt und die wässrige Phase abgeschieden wurde, liegt eine hydrophobe Phase vor, die zu einem überwiegenden Teil die auszutragenden Verunreinigungen enthält. In bevorzugten Ausführungsformen des Verfahrens ist vorgesehen, dass ein Teilstrom der hydrophoben Phase abgeführt und ein weiterer Teilstrom der hydrophoben Phase als Rücklauf im thermischen Trennverfahren eingesetzt wird. Besonders bevorzugt ist ein Rücklaufverhältnis zwischen dem zurückzuführenden und dem abzuführenden im Bereich von 4:1 bis 8:1.

Sowohl das thermische Trennverfahren als auch die destillative Trennung von Wasser und Lösungsmittel können jeweils kontinuierlich oder absatzweise betrieben werden.

Das erfindungsgemäße Verfahren ist besonders vorteilhaft einsetzbar bei der direkten Darstellung wasserfreier Aromaten. Wasserfrei im Sinne dieser Offenbarung bedeutet, dass der Wassergehalt der Aromatenfraktion nach der Extraktivdestillation unmittelbar den Anforderungen an das Reinprodukt genügt und keine der Extraktivdestillation nachgelagerten Trocknungsschritte durchgeführt werden müssen. Insbesondere ist es dann nicht notwendig, eine separate Wasserphase aus der kondensierten Aromatenfraktion abzutrennen In solchen Verfahren hat das Lösungsmittel im Lösungsmittelkreislauf (Sumpf der Stripper-Kolonne) üblicherweise einen Wassergehalt von kleiner 1 Massen-%, bevorzugt kleiner 0,5 Massen-% und besonders bevorzugt kleiner 1000 ppm. Des Weiteren wird bei dieser Variante auch kein Dampf der Stripper Kolonne zugesetzt, da dieser zu einem erhöhten Wassergehalt in der Aromatenfraktion führen würde.

Als Lösungsmittel für die Extraktivdestillation kommen unter anderen Sulfolan, Methylsulfolane, N-Methylpyrrolidon, N-Formylmorpholin, Ethylenglykol und deren Mischungen, sowie Mischungen aus den genannten Lösungsmitteln mit Wasser in Betracht. Besonders bevorzugt enthält das Lösungsmittel N-Formylmorpholin, welches sich insbesondere für die direkte Darstellung von wasserfreien Aromaten eignet.

Vorrichtungsmäßig wird die Aufgabe durch eine Vorrichtung zur Trennung eines kohlenwasserstoffhaltigen Einsatzstoffstroms durch Extraktivdestillation in mindestens einen Aliphaten-Produktstrom und einen Aromaten-Produktstrom gelöst, umfassend:
- eine Einrichtung zum Inkontaktbringen des Einsatzstoffstroms mit einem wasserlöslichen Lösungsmittel für Aromaten im Gegenstrom,
- eine Einrichtung zum destillativen Abtrennen einer Aliphatenfraktion aus dem erhaltenen Gemisch unter Verbleib des mit Aromaten angereicherten Lösungsmittels mit einer Abführung für die Aliphatenfraktion als Aliphaten-Produktstrom,
- eine Einrichtung zum Strippen der Aromaten aus dem mit Aromaten angereicherten Lösungsmittel mit einer Abführung für die Aromaten als Aromaten-Produktstrom,
- eine Rückführung für das an Aromaten abgereicherte Lösungsmittel in einem Lösungsmittelkreislauf zu der Einrichtung zum Inkontaktbringen des Einsatzstoffstroms mit Lösungsmittel, sowie
- eine Aufreinigungseinrichtung für das Lösungsmittel, die in dem Lösungsmittelkreislauf angeordnet ist und im Betrieb zumindest zeitweise zumindest von einem Teilstrom des an Aromaten abgereicherten Lösungsmittels durchlaufen wird, zur Entfernung von Verunreinigungen umfassend Verbindungen mit einem im Vergleich zu dem Lösungsmittel geringeren Siedepunkt aus dem Teilstrom.

Erfindungsgemäß umfasst die Aufreinigungseinrichtung eine thermische Trennvorrichtung mit einer Abführung zur thermischen Abtrennung und Abführung der Verunreinigungen in einem Kopfprodukt der thermischen Trennvorrichtung. Ferner weist die Aufreinigungseinrichtung eine Rückführung für das verbleibende aufgereinigte Lösungsmittel in den Lösungsmittelkreislauf auf.

Erfindungsgemäß ist die Abführung der Aufreinigungsvorrichtung für das Kopfprodukt mit einer Lösungsmittel-Rückgewinnungseinrichtung verbunden. In der Lösungsmittel-Rückgewinnungseinrichtung sind mindestens eine Mischvorrichtung für den Zusatz von Wasser unter Ausbildung einer wässrigen Phase und einer hydrophoben Phase und mindestens eine Scheidevorrichtung zur Abscheidung der wässrigen Phase von der hydrophoben Phase angeordnet. Die Lösungsmittel-Rückgewinnungseinrichtung weist ferner eine Abführung für die wässrige Phase auf, die mit einer Destillationskolonne zur Abdestillation des Wassers verbunden ist. Die Destillationskolonne weist eine Abführung für ein Sumpfprodukt der Destillationskolonne auf, über die das Sumpfprodukt in den Lösungsmittelkreislauf zurückführbar ist.

Bevorzugt weist die Destillationskolonne eine Kopfabführung für das abdestillierte Wasser auf, die unter Ausbildung eines Wasserkreislaufs mit der Mischvorrichtung für den Zusatz von Wasser verbunden ist.

Ferner ist bevorzugt stromaufwärts der Aufreinigungsvorrichtung mindestens ein Wärmetauscher zur Abkühlung des Teilstroms angeordnet, der mit der Destillationskolonne zur Übertragung der in dem Wärmetauscher anfallenden Wärmeenergie verbunden ist.

In bevorzugten Ausführungsformen ist die Destillationskolonne mit einer Vakuumerzeugungseinrichtung verbunden, die dazu eingerichtet ist, einen Unterdruck von kleiner 1 bar (a), bevorzugt kleiner 500 mbar (a) und besonders bevorzugt kleiner 200 mbar (a) in einem Kopfbereich der Destillationskolonne zu erzeugen.

In weiteren bevorzugten Ausführungsformen ist eine Abzweigung für eine Abführung eines Teilstroms der hydrophoben Phase vorgesehen, und ein weiterer Teilstrom der hydrophoben Phase ist der Aufreinigungsvorrichtung über eine Zuführung als Rücklauf zuführbar.

Ferner ist bevorzugt zwischen der thermischen Trennvorrichtung und der Lösungsmittel-Rückgewinnungseinrichtung ein zweiter Wärmetauscher zur Abkühlung des Kopfproduktes angeordnet. Besonders bevorzugt fällt das Kopfprodukt mit einer Temperatur von größer 120°C an, wird in einem Wärmetauscher abgekühlt und tritt in die Lösungsmittel-Rückgewinnungseinrichtung mit einer Temperatur im Bereich von 0°C bis 60°C ein. Die Rückgewinnung bei im Vergleich zur Temperatur der thermischen Trennung niedrigeren Temperatur ist bevorzugt, da hierdurch die Löslichkeit der Verunreinigungen im Lösungsmittel reduziert ist. Zu geringe Temperaturen sind zu vermeiden, um ein Erstarren des Lösungsmittels zu verhindern.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1: zeigt schematisch ein Ablaufdiagramm des erfindungsgemäßen Verfahrens nach einem ersten Ausführungsbeispiel, bei dem ein Teilstrom des Lösungsmittelkreislaufs durch ein thermisches Trennverfahren aufgereinigt wird,
- Fig. 2: zeigt schematisch ein erstes Ausführungsbeispiel der erfindungsgemäßen Vorrichtung, welches geeignet ist, das in Fig. 1 gezeigte Verfahren auszuführen,
- Fig. 3: zeigt schematisch einen zu dem Ausschnitt X in Fig. 2 alternativen apparativen Aufbau zur Durchführung der Extraktivdestillation in einer einzigen Kolonne für Extraktivdestillation,
- Fig. 4: zeigt schematisch einen zu dem Ausschnitt X in Fig. 2 alternativen apparativen Aufbau zur Durchführung der Extraktivdestillation in drei voneinander getrennten Kolonnen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

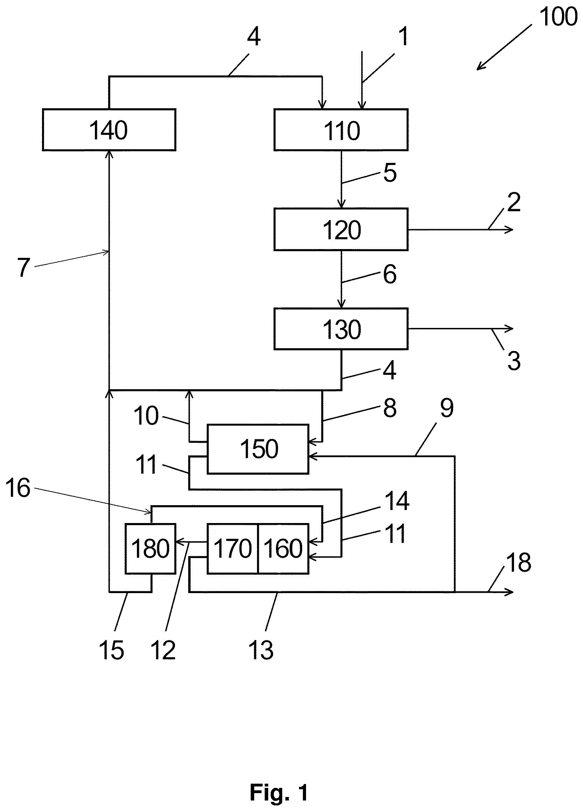

In Fig. 1 ist ein Ablaufdiagramm des erfindungsgemäßen Verfahrens 100 nach einem ersten Ausführungsbeispiel der Erfindung gezeigt. Bei dem Verfahren 100 wird ein kohlenwasserstoffhaltiger Einsatzstoffstrom 1 durch Extraktivdestillation in mindestens einen Aliphaten-Produktstrom 2 und einen Aromaten-Produktstrom 3 getrennt.

Das Verfahren 100 umfasst die folgenden Schritte:
Im Schritt 110 wird der Einsatzstoffstrom 1 mit einem wasserlöslichen Lösungsmittel 4 für Aromaten im Gegenstrom in Kontakt gebracht und es entsteht ein Gemisch 5. Anschließend wird in Schritt 120 eine Aliphatenfraktion aus dem erhaltenen Gemisch 5 unter Verbleib des mit Aromaten angereicherten Lösungsmittels 6 destillativ abgetrennt und die Aliphatenfraktion wird in dem Aliphaten-Produktstrom 2 abgeführt. Nachfolgend erfolgt in Schritt 130 ein Strippen der Aromaten aus dem mit Aromaten angereicherten Lösungsmittel 6 und ein Abführen der Aromaten in dem Aromaten-Produktstrom 3. Das Strippen erfolgt bevorzugt bei einer im Vergleich zur destillativen Abtrennung der Aliphatenfraktion erhöhten Temperatur und/oder einem erhöhten Druck. Das an Aromaten abgereicherte Lösungsmittel 4 wird in Schritt 140 in einem Lösungsmittelkreislauf 7 zur Extraktion weiterer Aromaten aus dem Einsatzstoffstrom 1 zurückgeführt.

Bei der Durchführung des Verfahrens 100 reichern sich unter anderem Verbindungen mit einem im Vergleich zum Lösungsmittel 4 geringeren Siedepunkt als Verunreinigungen in dem Lösungsmittelkreislauf 7 an. Diese Verunreinigungen sind zugleich so schwersiedend, dass sie den Lösungsmittelkreislauf 7 nicht über die destillative Abtrennung 120 oder das Strippen der Aromaten 130 verlassen können. Deshalb ist in Schritt 150 ein Aufreinigen zumindest eines Teilstroms 8 des an Aromaten abgereicherten Lösungsmittels 4 zur Entfernung der Verunreinigungen vorgesehen. Zum Aufreinigen 150 wird der Teilstrom 8 einem thermischen Trennverfahren unterzogen, bei dem die Verunreinigungen zumindest teilweise in einem Kopfprodukt 11 abgeführt und das verbleibende aufgereinigte Lösungsmittel 10 in den Lösungsmittelkreislauf 7 zurückgeführt wird.

Es kann vorgesehen sein, dass das Aufreinigen 150 des Lösungsmittels 4 nur zeitweilig während der Durchführung des Verfahrens erfolgt. Dafür kann der Teilstrom 8 beispielsweise über ein Steuerventil steuerbar sein. Der Volumenstrom des Teilstrom 8 wird vorzugsweise so geregelt, dass die Verunreinigungen im Lösungsmittel auf einen Sollwert oder Sollbereich eingeregelt werden. Der Sollwert oder Sollbereich der Verunreinigungen im Lösungsmittel liegt vorzugsweise im Bereich von 0,1-20 Massen-%, bevorzugt, 0,1-10 Massen-% und besonders bevorzugt 1- 5 Massen-%. Auf diese Weise können die zur Sicherstellung einer hervorragenden Selektivität und Kapazität des Lösungsmittels benötigten Betriebsmittelverbräuche reduziert werden.

Als thermisches Trennverfahren ist bevorzugt eine Destillation oder Rektifikation vorgesehen. Das thermische Trennverfahren kann ein- oder mehrstufig ausgebildet sein. Beispielsweise sind eine ein- oder mehrstufige Destillation oder ein ein- oder mehrstufiger Flash denkbar.

In dem Ausführungsbeispiel nach Fig. 1 ist ferner eine Rückgewinnung von Lösungsmittel aus dem Kopfprodukt 11 des thermischen Trennverfahrens vorgesehen. Zu diesem Zweck werden die folgenden weiteren Schritte durchgeführt:
In Schritt 160 wird das Kopfprodukt 11 des thermischen Trennverfahrens mit Wasser 14 versetzt unter Ausbildung einer wässrigen, lösungsmittelhaltigen Phase 12 und einer hydrophoben Phase 13. Bevorzugt wird zum Kopfprodukt Wasser in einem Massenverhältnis im Bereich von 30:1 bis 1:3, insbesondere 20:1 bis 1:2 und besonders bevorzugt 10:1 bis 1:1 hinzugefügt. Anschließend erfolgt in Schritt 170 ein Abscheiden der wässrigen Phase 12 von der hydrophoben Phase 13. Schließlich ist in Schritt 180 eine Destillation der wässrigen Phase 12 zur Abdestillation des Wassers vorgesehen, wobei das Sumpfprodukt 15 der Destillation 180 in den Lösungsmittelkreislauf 7 zurückgeführt wird.

Die Destillation 180 wird bevorzugt mit einem Kopfdruck von kleiner 1 bar (a), weiter bevorzugt kleiner 500 mbar (a) und besonders bevorzugt kleiner 200 mbar (a) durchgeführt. Die Sumpftemperaturen der Destillation 180 werden bevorzugt im Bereich kleiner 230°C, bevorzugt im Bereich 150-200°C eingestellt.

Bevorzugt ist ferner vorgesehen, dass das abdestillierte Wasser 14 in einem Wasserkreislauf 16 zurückgeführt und erneut dem Kopfprodukt 11 des thermischen Trennverfahrens zugesetzt wird.

Ein Teilstrom 18 der hydrophoben Phase 13 kann abgeführt werden. Beispielsweise kann der Teilstrom 18, wie in Fig. 1 gezeigt, als gesonderter Strom zur Anlagengrenze abgeführt werden. Soweit es die Spezifikationen des Aliphaten-Produktstromes 2 zulassen, kann dieser Teilstrom 18 auch dem Aliphaten-Produktstrom 2 beigemischt werden (nicht dargestellt). Ein weiterer Teilstrom 9 der hydrophoben Phase wird vorzugsweise als Rücklauf im thermischen Trennverfahren eingesetzt.

Bevorzugt kann zur Energieeinsparung vorgesehen sein, dass der Teilstrom 8 vor der Durchführung des thermischen Trennverfahrens in einem Wärmetauscher abgekühlt wird und die Destillation unter Einsatz der im Wärmetauscher anfallenden Wärmeenergie durchgeführt wird. Weiterhin erfolgt bevorzugt eine Abkühlung des Kopfproduktes 11 vor der Rückgewinnung des Lösungsmittels aus dem Kopfprodukt 11.

Das Lösungsmittel 4 im Lösungsmittelkreislauf 7 hat vorzugsweise einen Wassergehalt von kleiner 3 Massen-%, weiter bevorzugt kleiner 1 Massen-% und besonders bevorzugt kleiner 1000 ppm.

In bevorzugten Verfahrensvarianten enthält das Lösungsmittel 4, 6 N-Formylmorpholin. Besonders bevorzugt enthält das Lösungsmittel 4 einen Massenanteil von mindestens 50 % N-Formylmorpholin.

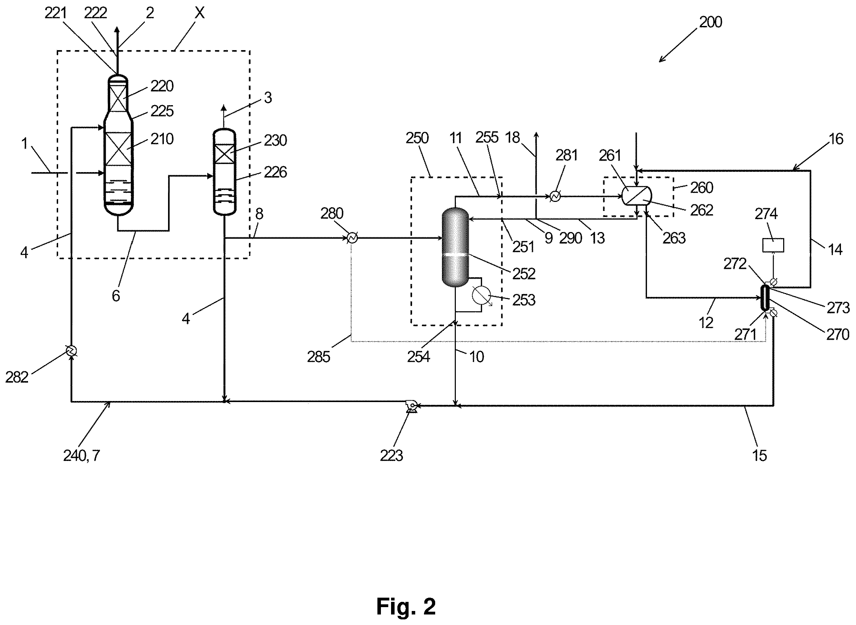

In **Fig. 2** ist ein Ausführungsbeispiel der erfindungsgemäßen Vorrichtung 200 zur Trennung eines kohlenwasserstoffhaltigen Einsatzstoffstroms 1 durch Extraktivdestillation in mindestens einen Aliphaten-Produktstrom 2 und einen Aromaten-Produktstrom 3 gezeigt. Die Vorrichtung umfasst eine Einrichtung 210 zum Inkontaktbringen des Einsatzstoffstroms mit einem wasserlöslichen Lösungsmittel 4 für Aromaten im Gegenstrom, eine Einrichtung zum destillativen Abtrennen einer Aliphatenfraktion 220 aus dem erhaltenen Gemisch 5 unter Verbleib des mit Aromaten angereicherten Lösungsmittels 6 mit einer Abführung 221 für die Aliphatenfraktion als Aliphaten-Produktstrom 2 und eine Einrichtung zum Strippen 230 der Aromaten aus dem mit Aromaten angereicherten Lösungsmittel 6 mit einer Abführung für die Aromaten als Aromaten-Produktstrom.

Die Vorrichtung umfasst ferner eine Rückführung 240 für das an Aromaten abgereicherte Lösungsmittel 4 in einem Lösungsmittelkreislauf 7 zu der Einrichtung 210 zum Inkontaktbringen des Einsatzstoffstroms 1 mit Lösungsmittel 4 im Gegenstrom, sowie eine Aufreinigungseinrichtung 250 für das Lösungsmittel 4 die in dem Lösungsmittelkreislauf 7 angeordnet ist und im Betrieb zumindest von einem Teilstrom 8 des an Aromaten abgereicherten Lösungsmittels 4 durchlaufen wird, zur Entfernung von Verunreinigungen umfassend Verbindungen mit einem im Vergleich zum Lösungsmittel geringeren Siedepunkt aus dem Teilstrom 8.

Die Aufreinigungseinrichtung 250 umfasst eine thermische Trennvorrichtung 252 mit einer Abführung 255 zur thermischen Abtrennung und Abführung der Verunreinigungen in einem Kopfprodukt 11, und eine Rückführung 254 für das verbleibende aufgereinigte Lösungsmittel 10 in den Lösungsmittelkreislauf 7. Das aufgereinigte Lösungsmittel 10 kann dem Lösungsmittelkreislauf 7 beispielsweise über eine Pumpe 223 zugeführt werden.

Die thermische Trennvorrichtung 252 kann wie in Fig. 2 dargestellt beispielsweise durch eine Destillationskolonne gebildet sein, die vorzugsweise im Sumpfbereich mit einem Verdampfer 253 ausgestattet sein kann. Alternativ oder zusätzlich sind auch mehrstufige Destillationen und/oder ein ein- oder mehrstufiger Flash als thermische Trennvorrichtung 252 einsetzbar.

Die Aufreinigungsvorrichtung 250 weist ferner eine Abführung 255 für das Kopfprodukt 11 des thermischen Trennverfahrens auf, die mit einer Lösungsmittel-Rückgewinnungseinrichtung 260 verbunden ist. In der Lösungsmittel-Rückgewinnungseinrichtung 260 sind mindestens eine Mischvorrichtung 261 für den Zusatz von Wasser 14 unter Ausbildung einer wässrigen Phase 12 und einer hydrophoben Phase 13 und mindestens eine Scheidevorrichtung 262 zur Abscheidung der wässrigen Phase 12 von der hydrophoben Phase 13 angeordnet.

Die Lösungsmittel-Rückgewinnungseinrichtung 260 kann ein- oder mehrstufig ausgebildet sein. Die Mischvorrichtung 261 kann zusammen mit der Scheidevorrichtung 262 in einem Gefäß ausgebildet sein, beispielsweise einer Mixer-Settler-Einheit oder auch als ein- oder mehrstufige Extraktionskolonne. Die Mischvorrichtung 261 kann aber auch lediglich durch eine Rohrleitungsverzweigung gebildet sein, über die Wasser in den Strom des Kopfprodukts 11 eingespeist werden kann.

Vorzugsweise werden Kopfprodukt 11 und Wasser 14 in der Lösungsmittel-Rückgewinnungseinrichtung 260 im Gegenstrom geführt. Besonders bevorzugt erfolgt bei mehrstufigen Rückgewinnungseinrichtungen 260 der Zusatz von Wasser 14 durch Zusatz der wässrigen Phase 12 der jeweils nachfolgenden Stufe. Auf diese Weise reichert sich das Lösungsmittel in der wässrigen Phase gegenläufig zur Konzentration des Lösungsmittels in der hydrophoben Phase 13 über die Stufen hinweg an. Der Einsatz von frischem bzw. aufbereitetem Wasser kann dadurch reduziert werden.

Die Lösungsmittel-Rückgewinnungseinrichtung 260 weist eine Abführung 263 für die wässrige Phase 12 auf, die mit einer Destillationskolonne 270 zur Abdestillation des Wassers 14 verbunden ist. Die Destillationskolonne 270 hat eine Abführung 271 für ein Sumpfprodukt 15 der Destillationskolonne 270, über die das Sumpfprodukt 15 in den Lösungsmittelkreislauf 7 zurückführbar ist.

Die Destillationskolonne 270 weist ferner eine Kopfabführung 272 für das abdestillierte Wasser 14 auf, die unter Ausbildung eines Wasserkreislaufs 16 mit der Mischvorrichtung 261 für den Zusatz von Wasser 14 verbunden ist.

Die Destillationskolonne 270 ist vorzugsweise mit einer Vakuumerzeugungseinrichtung 274 verbunden, die dazu eingerichtet ist, einen Unterdruck von kleiner 1 bar (a), bevorzugt kleiner 500 mbar (a) und besonders bevorzugt kleiner 200 mbar (a) in einem Kopfbereich 273 der Destillationskolonne 270 zu erzeugen.

Bevorzugt ist eine Wärmeintegration der Destillationskolonne 270 vorgesehen. Dazu kann stromaufwärts der Aufreinigungsvorrichtung 250 mindestens ein Wärmetauscher 280 zur Abkühlung des Teilstroms 8 angeordnet sein, der mit der Destillationskolonne 270 zur Übertragung der in dem Wärmetauscher 280 anfallenden Wärmeenergie 285 verbunden ist. Besonders bevorzugt wird der gesamte Energiebedarf der Destillationskolonne 270 durch die übertragene Wärmeenergie 285 gedeckt.

Vor Eintritt in die Lösungsmittel-Rückgewinnungseinrichtung 260 kann eine Abkühlung des Kopfproduktes 11 in einem zweiten Wärmetauscher 281 erfolgen. Bevorzugt erfolgt die Abkühlung im Wärmetauscher 281 bis in einen Temperaturbereich von 0 °C bis 60 °C. Die zusätzlich in diesem Wärmetauscher 281 anfallende Wärmeenergie kann beispielsweise zur Aufheizung der wässrigen Phase 12 vor Eintritt in die Destillationskolonne 270 verwendet werden.

Nach Austritt aus der Lösungsmittel-Rückgewinnungseinrichtung 260 kann die hydrophobe Phase 13 eine Abzweigung 290 für eine Abführung eines Teilstroms 18 der hydrophoben Phase 13 vorgesehen sein. Ein weiterer Teilstrom 9 der hydrophoben Phase 13 kann der Aufreinigungsvorrichtung 250 über eine Zuführung 251 als Rücklauf zugeführt werden. Der Teilstrom 18 kann als gesonderter Strom zur Anlagengrenze abgeführt werden, oder auch beispielsweise dem Aliphaten-Produktstrom 2 beigemischt werden.

Bei dem in Fig. 2 dargestellten Ausführungsbeispiel ist der Hauptprozess der Extraktivdestillation im Ausschnitt X dargestellt. Dabei sind die Einrichtung zum Inkontaktbringen im Gegenstrom 210 und die Einrichtung zum destillativen Abtrennen 220 in einer Kolonne zur Extraktivdestillation 225 zusammengefasst und für die Einrichtung zum Strippen 230 ist eine separate Stripper-Kolonne 226 vorgesehen.

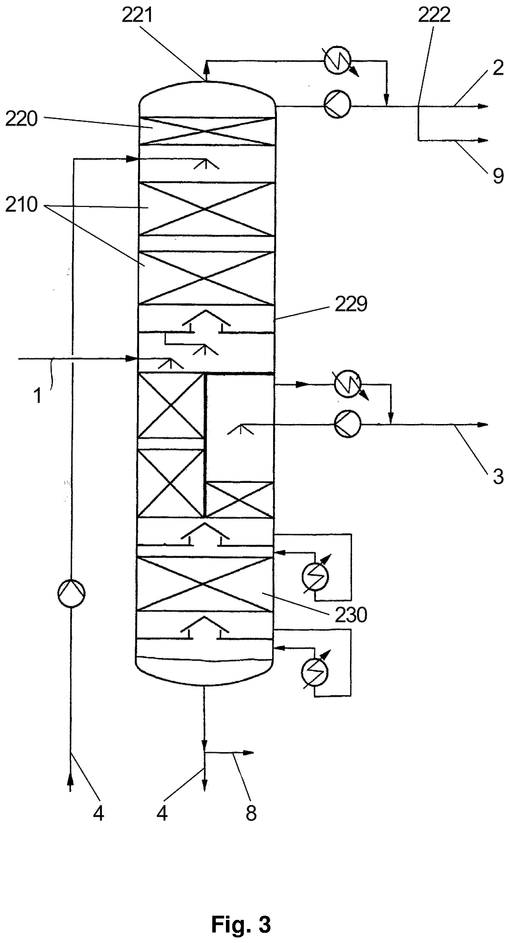

**Fig. 3** zeigt einen alternativen apparativen Aufbau für den Ausschnitt X in der Vorrichtung gemäß Fig. 2. Bei dem in Fig. 3 dargestellten Aufbau sind die Einrichtung zum Inkontaktbringen im Gegenstrom 210, die Einrichtung zum destillativen Abtrennen 220 und die Einrichtung zum Strippen 230 in einer einzigen Kolonne zur Extraktivdestillation 229 mit integrierter Strippung zusammengefasst. Vorzüge dieses Aufbaus sind, zum Beispiel, ein geringerer apparativer Aufwand und ein geringerer Platzbedarf der Vorrichtung 200.

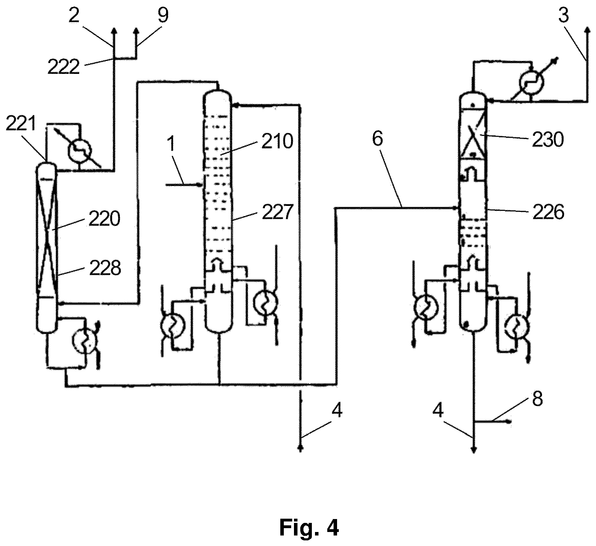

**Fig. 4** zeigt einen weiteren alternativen apparativen Aufbau für den Ausschnitt X in der Vorrichtung gemäß Fig. 2. Bei dem in Fig. 4 dargestellten Aufbau sind für die Einrichtung zum Inkontaktbringen im Gegenstrom 210 eine Kolonne zur Extraktivdestillation 227 und für die Einrichtung zum destillativen Abtrennen 220 eine eigene Kolonne zur Raffinatreinigung 228 vorgesehen. Die Einrichtung zum Strippen 230 ist in einer separaten Stripper-Kolonne 226 angeordnet. Vorteile dieses Aufbaus liegen in der niedrigeren Bauhöhe der Kolonne zur Extraktivdestillation 227. Bei praktischen oder genehmigungsrechtlichen Beschränkungen der Bauhöhe der Anlage kann somit bevorzugt auf diesen Aufbau zurückgegriffen werden.

### Bezugszeichenliste

- 1: Einsatzstoffstrom
- 2: Aliphaten-Produktstrom
- 3: Aromaten-Produktstrom
- 4: Lösungsmittel für Aromaten
- 5: Gemisch aus Einsatzstoff und Lösungsmittel
- 6: mit Aromaten angereichertes Lösungsmittel
- 7: Lösungsmittelkreislauf
- 8: Teilstrom des Lösungsmittelkreislaufs
- 9: Teilstrom der hydrophoben Phase
- 10: aufgereinigtes Lösungsmittel
- 11: Kopfprodukt des thermischen Trennverfahrens
- 12: wässrige Phase
- 13: hydrophobe Phase
- 14: Wasser
- 15: Sumpfprodukt der Destillation
- 16: Wasserkreislauf
- 18: Teilstrom der hydrophoben Phase

- 100: Verfahren zur Trennung eines kohlenwasserstoffhaltigen Einsatzstoffstroms
- 110: Inkontaktbringen von Einsatzstoffstrom mit Lösungsmittel im Gegenstrom
- 120: Destillatives Abtrennen einer Aliphatenfraktion
- 130: Strippen der Aromaten aus dem Lösungsmittel
- 140: Rückführen des Lösungsmittels
- 150: Aufreinigen des Teilstroms des an Aromaten abgereicherten Lösungsmittels
- 160: Versetzen mit Wasser
- 170: Abscheiden der wässrigen von der hydrophoben Phase
- 180: Destillation der wässrigen Phase

- 200: Vorrichtung zur Trennung eines kohlenwasserstoffhaltigen Einsatzstoffstroms
- 210: Einrichtung zum Inkontaktbringen im Gegenstrom
- 220: Einrichtung zum destillativen Abtrennen
- 221: Abführung
- 222: Abzweigung
- 223: Pumpe
- 225, 227: Kolonne zur Extraktivdestillation
- 226: Stripper-Kolonne
- 228: Kolonne zur Raffinatreinigung
- 229: Kolonne zur Extraktivdestillation mit integrierter Strippung
- 230: Einrichtung zum Strippen
- 240: Rückführung für das Lösungsmittel
- 250: Aufreinigungseinrichtung
- 251: Zuführung der Aufreinigungseinrichtung
- 252: thermische Trennvorrichtung
- 253: Verdampfer
- 254: Rückführung für aufgereinigtes Lösungsmittel
- 255: Abführung für Kopfprodukt
- 260: Lösungsmittel-Rückgewinnungseinrichtung
- 261: Mischvorrichtung
- 262: Scheidevorrichtung
- 263: Abführung für die wässrige Phase
- 270: Destillationskolonne
- 271: Abführung für das Sumpfprodukt
- 272: Kopfabführung
- 273: Kopfbereich
- 274: Vakuumerzeugungseinrichtung
- 280 bis 282: Wärmetauscher
- 285: Wärmeenergie
- 290: Abzweigung

## Patentansprüche

1. Verfahren zur Trennung eines kohlenwasserstoffhaltigen Einsatzstoffstroms (1) durch Extraktivdestillation in mindestens einen Aliphaten-Produktstrom (2) und einen Aromaten-Produktstrom (3), umfassend die folgenden Schritte:
• Inkontaktbringen (110) des Einsatzstoffstroms (1) mit einem wasserlöslichen Lösungsmittel (4) für Aromaten im Gegenstrom,
• Destillatives Abtrennen (120) einer Aliphatenfraktion aus dem erhaltenen Gemisch (5) unter Verbleib des mit Aromaten angereicherten Lösungsmittels (6) und Abführen der Aliphatenfraktion in dem Aliphaten-Produktstrom (2)
• Strippen der Aromaten (130) aus dem mit Aromaten angereicherten Lösungsmittel (6) und Abführen der Aromaten in dem Aromaten-Produktstrom (3)
• Rückführen (140) des an Aromaten abgereicherten Lösungsmittels (4) in einem Lösungsmittelkreislauf (7) zur Extraktion weiterer Aromaten aus dem Einsatzstoffstrom (1), wobei sich als Verunreinigungen Verbindungen mit einem im Vergleich zu dem Lösungsmittel (4) geringeren Siedepunkt in dem Lösungsmittelkreislauf (7) ansammeln, und
• Aufreinigen (150) zumindest eines Teilstroms (8) des an Aromaten abgereicherten Lösungsmittels (4) zur Entfernung der Verunreinigungen,
**dadurch gekennzeichnet, dass**
der Teilstrom (8) zum Aufreinigen (150) einem thermischen Trennverfahren unterzogen wird, bei dem die Verunreinigungen zumindest teilweise in einem Kopfprodukt (11) abgeführt und das verbleibende aufgereinigte Lösungsmittel (10) in den Lösungsmittelkreislauf (7) zurückgeführt wird,
wobei zur Rückgewinnung von Lösungsmittel aus dem Kopfprodukt (11) des thermischen Trennverfahrens die folgenden weiteren Schritte durchgeführt werden:
• Versetzen (160) des Kopfproduktes (11) des thermischen Trennverfahrens mit Wasser (14) unter Ausbildung einer wässrigen, lösungsmittelhaltigen Phase (12) und einer hydrophoben Phase (13),
• Abscheiden (170) der wässrigen Phase (12) von der hydrophoben Phase (13) und
• Destillation (180) der wässrigen Phase (12) zur Abdestillation von Wasser, wobei das Sumpfprodukt (15) der Destillation (180) in den Lösungsmittelkreislauf (7) zurückgeführt wird.

2. Verfahren nach Anspruch 1, **dadurch gekennzeichnet, dass** das abdestillierte Wasser (14) in einem Wasserkreislauf (16) zurückgeführt und erneut dem Kopfprodukt (11) des thermischen Trennverfahrens zugesetzt wird.

3. Verfahren nach Anspruch 1 oder 2, **dadurch gekennzeichnet, dass** der Teilstrom (8) vor Durchführung des thermischen Trennverfahrens in einem Wärmetauscher (280) abgekühlt wird und die Destillation (180) unter Einsatz der im Wärmetauscher (280) anfallenden Wärmeenergie (285) durchgeführt wird.

4. Verfahren nach einem der Ansprüche 1 bis 3, **dadurch gekennzeichnet, dass** die Destillation (180) mit einem Kopfdruck von kleiner 1 bar (a), bevorzugt kleiner 500 mbar (a) und besonders bevorzugt kleiner 200 mbar (a) durchgeführt wird.

5. Verfahren nach einem der Ansprüche 1 bis 4, **dadurch gekennzeichnet, dass** ein Teilstrom (18) der hydrophoben Phase (13) abgeführt und ein weiterer Teilstrom (9) der hydrophoben Phase (13) als Rücklauf im thermischen Trennverfahren eingesetzt wird.

6. Verfahren nach einem der Ansprüche 1 bis 5, **dadurch gekennzeichnet, dass** das Lösungsmittel (4) im Lösungsmittelkreislauf (7) einen Wassergehalt von kleiner 3 Massen-%, bevorzugt kleiner 1 Massen-% und besonders bevorzugt kleiner 1000 ppm hat.

7. Verfahren nach einem der Ansprüche 1 bis 6, **dadurch gekennzeichnet, dass** das Lösungsmittel (4, 6) N-Formylmorpholin enthält.

8. Vorrichtung zur Trennung eines kohlenwasserstoffhaltigen Einsatzstoffstroms (1) durch Extraktivdestillation in mindestens einen Aliphaten-Produktstrom (2) und einen Aromaten-Produktstrom (3), umfassend:
• eine Einrichtung zum Inkontaktbringen im Gegenstrom (210) des Einsatzstoffstroms mit einem wasserlöslichen Lösungsmittel (4) für Aromaten,
• eine Einrichtung zum destillativen Abtrennen einer Aliphatenfraktion (220) aus dem erhaltenen Gemisch (5) unter Verbleib des mit Aromaten angereicherten Lösungsmittels (6) mit einer Abführung (221) für die Aliphatenfraktion als Aliphaten-Produktstrom (2),
• eine Einrichtung zum Strippen (230) der Aromaten aus dem mit Aromaten angereicherten Lösungsmittel (6) mit einer Abführung für die Aromaten als Aromaten-Produktstrom,
• eine Rückführung (240) für das an Aromaten abgereicherte Lösungsmittel (4) in einem Lösungsmittelkreislauf (7) zu der Einrichtung zum Inkontaktbringen im Gegenstrom (210) des Einsatzstoffstroms (1) mit Lösungsmittel (4), sowie
• eine Aufreinigungseinrichtung (250) für das Lösungsmittel (4), die in dem Lösungsmittelkreislauf (7) angeordnet ist und im Betrieb zumindest zeitweilig zumindest von einem Teilstrom (8) des an Aromaten abgereicherten Lösungsmittels (4) durchlaufen wird, zur Entfernung von Verunreinigungen umfassend Verbindungen mit einem im Vergleich zu dem Lösungsmittel (4) geringeren Siedepunkt aus dem Teilstrom (8),
wobei die Aufreinigungseinrichtung (250) eine thermische Trennvorrichtung (252) mit einer Abführung (255) umfasst zur thermischen Abtrennung und Abführung der Verunreinigungen in einem Kopfprodukt (11), und
die Aufreinigungseinrichtung (250) eine Rückführung (254) für das verbleibende aufgereinigte Lösungsmittel (10) in den Lösungsmittelkreislauf (7) aufweist,
**dadurch gekennzeichnet, dass** die Abführung (255) für das Kopfprodukt (11) der thermischen Trennvorrichtung (252) mit einer Lösungsmittel-Rückgewinnungseinrichtung (260) verbunden ist, in welcher mindestens eine Mischvorrichtung (261) für den Zusatz von Wasser (14) unter Ausbildung einer wässrigen Phase (12) und einer hydrophoben Phase (13) und mindestens eine Scheidevorrichtung (262) zur Abscheidung der wässrigen Phase (12) von der hydrophoben Phase (13) angeordnet sind, wobei die Lösungsmittel-Rückgewinnungseinrichtung (260) eine Abführung (263) für die wässrige Phase (12) aufweist, die mit einer Destillationskolonne (270) zur Abdestillation des Wassers (14) verbunden ist und die Destillationskolonne (270) eine Abführung (271) für ein Sumpfprodukt (15) der Destillationskolonne (270) aufweist, über die das Sumpfprodukt (15) in den Lösungsmittelkreislauf (7) zurückführbar ist.

9. Vorrichtung nach Anspruch 8, **dadurch gekennzeichnet, dass** die Destillationskolonne (270) eine Kopfabführung (272) für das abdestillierte Wasser (14) aufweist, die unter Ausbildung eines Wasserkreislaufs (16) mit der Mischvorrichtung (261) für den Zusatz von Wasser (14) verbunden ist.

10. Vorrichtung nach Anspruch 8 oder 9, **dadurch gekennzeichnet, dass** stromaufwärts der Aufreinigungsvorrichtung (250) mindestens ein erster Wärmetauscher (280) zur Abkühlung des Teilstroms (8) angeordnet ist, der mit der Destillationskolonne (270) zur Übertragung der in dem ersten Wärmetauscher (280) anfallenden Wärmeenergie (285) verbunden ist.

11. Vorrichtung nach einem der Ansprüche 8 bis 10, **dadurch gekennzeichnet, dass** die Destillationskolonne (270) mit einer Vakuumerzeugungseinrichtung (274) verbunden ist, die dazu eingerichtet ist, einen Unterdruck von kleiner 1 bar (a), bevorzugt kleiner 500 mbar (a) und besonders bevorzugt kleiner 200 mbar (a) in einem Kopfbereich (273) der Destillationskolonne (270) zu erzeugen.

12. Vorrichtung nach einem der Ansprüche 8 bis 11, **dadurch gekennzeichnet, dass** eine Abzweigung (290) für eine Abführung eines Teilstroms (18) der hydrophoben Phase (13) vorgesehen ist und ein weiterer Teilstrom (9) der hydrophoben Phase (13) der Aufreinigungsvorrichtung (250) über eine Zuführung (251) als Rücklauf zuführbar ist.

13. Vorrichtung nach einem der Ansprüche 8 bis 12, **dadurch gekennzeichnet, dass** zwischen der thermischen Trennvorrichtung (252) und der Lösungsmittel-Rückgewinnungseinrichtung (260) ein zweiter Wärmetauscher (281) zur Abkühlung des Kopfproduktes (11) angeordnet ist.

## Claims

1. Process for separating a hydrocarbon-containing feed stream (1) by extractive distillation into at least one aliphatic product stream (2) and one aromatic product stream (3), comprising the following steps:
• Bringing the feed stream (1) into contact (110) with a water-soluble solvent (4) for aromatics in countercurrent,
• Distillative separation (120) of an aliphatic fraction from the mixture obtained (5), leaving the solvent enriched with aromatics (6), and removal of the aliphatic fraction in the aliphatic product stream (2)
• Stripping the aromatics (130) from the solvent enriched with aromatics (6) and discharging the aromatics in the aromatics product stream (3)
• Returning (140) the solvent (4) depleted of aromatics in a solvent circuit (7) for the extraction of further aromatics from the feed stream (1), whereby compounds with a lower boiling point than the solvent (4) accumulate as impurities in the solvent circuit (7), and
• Purifying (150) at least one partial stream (8) of the solvent (4) depleted of aromatics to remove the impurities,
**characterized in that**
the partial stream (8) is subjected to a thermal separation process for purification (150), in which the impurities are at least partially removed in a head product (11) and the remaining purified solvent (10) is returned to the solvent circuit (7),
wherein the following further steps are carried out to recover solvent from the head product (11) of the thermal separation process:
• mixing (160) the head product (11) of the thermal separation process with water (14) to form an aqueous, solvent-containing phase (12) and a hydrophobic phase (13),
• separating (170) the aqueous phase (12) from the hydrophobic phase (13), and
• distilling (180) the aqueous phase (12) to distill off water, wherein the bottom product (15) of the distillation (180) is returned to the solvent circuit (7).

2. Method according to claim 1, **characterized in that** the distilled water (14) is returned in a water circuit (16) and added again to the head product (11) of the thermal separation process.

3. Method according to claim 1 or 2, **characterized in that** the partial stream (8) is cooled in a heat exchanger (280) before the thermal separation process is carried out, and the distillation (180) is carried out using the heat energy (285) generated in the heat exchanger (280).

4. Method according to one of claims 1 to 3, **characterized in that** the distillation (180) is carried out at a head pressure of less than 1 bar (a), preferably less than 500 mbar (a) and particularly preferably less than 200 mbar (a).

5. Method according to one of claims 1 to 4, **characterized in that** a partial stream (18) of the hydrophobic phase (13) is discharged and a further partial stream (9) of the hydrophobic phase (13) is used as a return flow in the thermal separation process.

6. Method according to one of claims 1 to 5, **characterized in that** the solvent (4) in the solvent circuit (7) has a water content of less than 3% by mass, preferably less than 1% by mass, and particularly preferably less than 1000 ppm.

7. Method according to one of claims 1 to 6, **characterized in that** the solvent (4, 6) contains N-formylmorpholine.

8. Device for separating a hydrocarbon-containing feed stream (1) by extractive distillation into at least one aliphatic product stream (2) and one aromatic product stream (3), comprising:
• a device for bringing the feed stream into countercurrent contact (210) with a water-soluble solvent (4) for aromatics,
• a device for distillatively separating an aliphatic fraction (220) from the mixture obtained (5), leaving the solvent enriched with aromatics (6) with a discharge (221) for the aliphatic fraction as an aliphatic product stream (2),
• a device for stripping (230) the aromatics from the solvent (6) enriched with aromatics, with a discharge for the aromatics as an aromatics product stream (3),
• a recirculation line (240) for the solvent depleted of aromatics (4) in a solvent circuit (7) to the device for bringing the feed stream (1) into countercurrent contact (210) with solvent (4), and
• a purification device (250) for the solvent (4), which is arranged in the solvent circuit (7) and, during operation, is at least temporarily traversed by at least a partial stream (8) of the solvent (4) depleted of aromatics, for removing impurities comprising compounds with a lower boiling point than the solvent (4) from the partial stream (8),
wherein the purification device (250) comprises a thermal separation device (252) with a discharge (255) for the thermal separation and discharge of the impurities in a head product (11), and
the purification device (250) has a return line (254) for the remaining purified solvent (10) into the solvent circuit (7),
**characterized in that** the discharge line (255) for the head product (11) of the thermal separation device (252) is connected to a solvent recovery device (260) in which at least one mixing device (261) for the addition of water (14) to form an aqueous phase (12) and a hydrophobic phase (13) and at least one separating device (262) for separating the aqueous phase (12) from the hydrophobic phase (13) are arranged, wherein the solvent recovery device (260) has a discharge (263) for the aqueous phase (12), which is connected to a distillation column (270) for distilling off the water (14), and the distillation column (270) has an outlet (271) for a bottom product (15) of the distillation column (270), via which the bottom product (15) can be returned to the solvent circuit (7).

9. Device according to claim 8, **characterized in that** the distillation column (270) has a head outlet (272) for the distilled water (14), which is connected to the mixing device (261) for adding water (14), forming a water circuit (16).

10. Device according to claim 8 or 9, **characterized in that** upstream of the purification device (250) at least one first heat exchanger (280) is arranged for cooling the partial stream (8), which is connected to the distillation column (270) for transferring the heat energy (285) generated in the first heat exchanger (280).

11. Device according to one of claims 8 to 10, **characterized in that** the distillation column (270) is connected to a vacuum generating device (274) which is designed to generate a negative pressure of less than 1 bar (a), preferably less than 500 mbar (a) and particularly preferably less than 200 mbar (a) in a head region (273) of the distillation column (270).

12. Device according to one of claims 8 to 11, **characterized in that** a branch (290) is provided for discharging a partial stream (18) of the hydrophobic phase (13), and a further partial stream (9) of the hydrophobic phase (13) can be fed to the purification device (250) via a feed (251) as a return flow.

13. Device according to any one of claims 8 to 12, **characterized in that** a second heat exchanger (281) for cooling the head product (11) is arranged between the thermal separation device (252) and the solvent recovery device (260).

## Revendications

1. Procédé de séparation d'un flux de matière première contenant des hydrocarbures (1) par distillation extractive en au moins un flux de produit aliphatique (2) et un flux de produit aromatique (3), comprenant les étapes suivantes :
• mise en contact (110) du flux de charge d'alimentation (1) avec un solvant hydrosoluble (4) pour les aromatiques à contre-courant,
• Séparation par distillation (120) d'une fraction aliphatique du mélange obtenu (5) tout en conservant le solvant enrichi en aromatiques (6) et évacuation de la fraction aliphatique dans le flux de produit aliphatique (2)
• Stripping des aromatiques (130) du solvant enrichi en aromatiques (6) et évacuation des aromatiques dans le flux de produit aromatique (3)
• Recyclage (140) du solvant appauvri en aromatiques (4) dans un circuit de solvant (7) pour extraire d'autres aromatiques du flux de matière première (1), des composés ayant un point d'ébullition inférieur à celui du solvant (4) s'accumulant dans le circuit de solvant (7) sous forme d'impuretés, et
• purification (150) d'au moins un flux partiel (8) du solvant appauvri en aromatiques (4) pour éliminer les impuretés,
**caractérisé en ce que**
le flux partiel (8) est soumis à un procédé de séparation thermique pour la purification (150), dans lequel les impuretés sont au moins partiellement évacuées dans un produit de tête (11) et le solvant purifié restant (10) est renvoyé dans le circuit de solvant (7), les étapes supplémentaires suivantes étant effectuées pour récupérer le solvant à partir du produit de tête (11) du procédé de séparation thermique :
• mélange (160) du produit de tête (11) du procédé de séparation thermique avec de l'eau (14) pour former une phase aqueuse contenant du solvant (12) et une phase hydrophobe (13),
• séparation (170) de la phase aqueuse (12) de la phase hydrophobe (13) et
• distillation (180) de la phase aqueuse (12) pour éliminer l'eau, le produit de fond (15) de la distillation (180) étant renvoyé dans le circuit de solvant (7).

2. Procédé selon la revendication 1, **caractérisé en ce que** l'eau distillée (14) est recyclée dans un circuit d'eau (16) et réajoutée au produit de tête (11) du procédé de séparation thermique.

3. Procédé selon la revendication 1 ou 2, **caractérisé en ce que** le flux partiel (8) est refroidi dans un échangeur de chaleur (280) avant la mise en œuvre du procédé de séparation thermique et que la distillation (180) est réalisée en utilisant l'énergie thermique (285) produite dans l'échangeur de chaleur (280).

4. Procédé selon l'une des revendications 1 à 3, **caractérisé en ce que** la distillation (180) est effectuée avec une pression de tête inférieure à 1 bar (a), de préférence inférieure à 500 mbar (a) et de manière particulièrement préférée inférieure à 200 mbar (a).

5. Procédé selon l'une des revendications 1 à 4, **caractérisé en ce qu'**un courant partiel (18) de la phase hydrophobe (13) est évacué et un autre courant partiel (9) de la phase hydrophobe (13) est utilisé comme retour dans le procédé de séparation thermique.

6. Procédé selon l'une des revendications 1 à 5, **caractérisé en ce que** le solvant (4) dans le circuit de solvant (7) a une teneur en eau inférieure à 3 % en masse, de préférence inférieure à 1 % en masse et de manière particulièrement préférée inférieure à 1000 ppm.

7. Procédé selon l'une des revendications 1 à 6, **caractérisé en ce que** le solvant (4, 6) contient de la N-formylmorpholine.

8. Dispositif pour séparer un flux de matière première contenant des hydrocarbures (1) par distillation extractive en au moins un flux de produit aliphatique (2) et un flux de produit aromatique (3), comprenant:
• un dispositif pour mettre en contact à contre-courant (210) le flux de matière première avec un solvant hydrosoluble (4) pour les aromatiques,
• un dispositif pour séparer par distillation une fraction aliphatique (220) du mélange obtenu (5) tout en conservant le solvant enrichi en aromatiques (6) avec une évacuation (221) pour la fraction aliphatique sous forme de flux de produit aliphatique (2),
• un dispositif pour extraire (230) les composés aromatiques du solvant enrichi en composés aromatiques (6) avec une évacuation pour les composés aromatiques sous forme de flux de produit aromatique (3),
• un retour (240) pour le solvant (4) appauvri en aromatiques dans un circuit de solvant (7) vers le dispositif pour mettre en contact à contre-courant (210) le flux de matière première (1) avec le solvant (4), ainsi que
• un dispositif de purification (250) pour le solvant (4), qui est disposé dans le circuit de solvant (7) et qui, pendant le fonctionnement, est traversé au moins temporairement par au moins un flux partiel (8) du solvant (4) appauvri en aromatiques, afin d'éliminer du flux partiel (8) les impuretés comprenant des composés ayant un point d'ébullition inférieur à celui du solvant (4),
le dispositif de purification (250) comprenant un dispositif de séparation thermique (252) avec une évacuation (255) pour la séparation thermique et l'évacuation des impuretés dans un produit de tête (11), et
le dispositif de purification (250) présente un retour (254) pour le solvant purifié restant (10) dans le circuit de solvant (7),
**caractérisé en ce que** l'évacuation (255) pour le produit de tête (11) du dispositif de séparation thermique (252) est reliée à un dispositif de récupération de solvant (260) dans lequel au moins un dispositif de mélange (261) pour l'ajout d'eau (14) avec formation d'une phase aqueuse (12) et d'une phase hydrophobe (13) et au moins un dispositif de séparation (262) pour séparer la phase aqueuse (12) de la phase hydrophobe (13) sont disposés, le dispositif de récupération de solvant (260) présentant une évacuation (263) pour la phase aqueuse (12), qui est reliée à une colonne de distillation (270) pour la distillation de l'eau (14), et la colonne de distillation (270) comporte une évacuation (271) pour un produit de fond (15) de la colonne de distillation (270), par laquelle le produit de fond (15) peut être renvoyé dans le circuit de solvant (7).

9. Dispositif selon la revendication 8, **caractérisé en ce que** la colonne de distillation (270) comporte une évacuation supérieure (272) pour l'eau distillée (14), qui est reliée au dispositif de mélange (261) pour l'ajout d'eau (14) en formant un circuit d'eau (16).

10. Dispositif selon la revendication 8 ou 9, **caractérisé en ce qu'**au moins un premier échangeur de chaleur (280) est disposé en amont du dispositif de purification (250) pour refroidir le flux partiel (8), lequel est relié à la colonne de distillation (270) pour transférer l'énergie thermique (285) produite dans le premier échangeur de chaleur (280).

11. Dispositif selon l'une des revendications 8 à 10, **caractérisé en ce que** la colonne de distillation (270) est reliée à un dispositif de production de vide (274) qui est conçu pour produire une dépression inférieure à 1 bar (a), de préférence inférieure à 500 mbar (a) et de manière particulièrement préférée inférieure à 200 mbar (a) dans une zone de tête (273) de la colonne de distillation (270).

12. Dispositif selon l'une des revendications 8 à 11, **caractérisé en ce qu'**une dérivation (290) est prévue pour évacuer un courant partiel (18) de la phase hydrophobe (13) et qu'un autre courant partiel (9) de la phase hydrophobe (13) peut être acheminé vers le dispositif de purification (250) via une alimentation (251) en tant que retour.

13. Dispositif selon l'une des revendications 8 à 12, **caractérisé en ce qu'**un deuxième échangeur de chaleur (281) destiné à refroidir le produit de tête (11) est disposé entre le dispositif de séparation thermique (252) et le dispositif de récupération de solvant (260).
